# EUROPEAN PATENT APPLICATION

(11) **EP 4 782 421 A1**
(43) Date of publication of application: **29.07.2026**
(21) Application number: 24867983.9
(22) Date of filing: 19.08.2024
(51) Int. Cl.: C04B 35/495, H01G 4/30

(54) **DIELECTRIC COMPOSITION, DIELECTRIC ELEMENT, AND LAMINATED ELECTRONIC COMPONENT**

(30) Priority: 20.09.2023 JP 2023152101
(71) Applicant: Niterra Co., Ltd., Nagoya-shi, Aichi 461-0005 (JP)
(72) Inventor: KIMURA, Koya, Nagoya-shi, Aichi 461-0005 (JP); HIROSE, Yoshinobu, Nagoya-shi, Aichi 461-0005 (JP); KOZUKA, Hisashi, Nagoya-shi, Aichi 461-0005 (JP)
(74) Representative: Grünecker Patent- und Rechtsanwälte PartG mbB
(86) International application number: PCT/JP2024/029256
(87) International publication number: WO 2025/062902

(57) **Abstract**

A dielectric composition of the present invention contains a strontium component, a sodium component, a niobium component, a calcium component, an yttrium component, and a zirconium component, wherein the mole ratios (%) of the respective components of the dielectric composition, expressed as their oxides, satisfy the following conditions: 14.7 ≤ strontium component ≤ 20.7, 13.5 ≤ sodium component ≤ 23.5, 60.1 ≤ niobium component ≤ 63.2, 0.66 ≤ calcium component ≤ 2.93, 0.53 ≤ yttrium component ≤ 2.23, and 0.48 ≤ zirconium component ≤ 2.27.

## Description

### TECHNICAL FIELD

The present invention relates to a dielectric composition, a dielectric element, and a laminated electronic component.

### BACKGROUND ART

A dielectric capacitor (for example, a laminated ceramic capacitor) is a capacitor including a dielectric layer formed of a dielectric composition and is used as a major component in various electronic apparatuses such as home appliances, automobile control equipment, etc. Among such dielectric capacitors, for example, those used in powertrains of electric vehicles are required to have high withstand voltages (so that they do not break down under application of high voltage) and maintain their high relative permittivities in high electric fields, because higher voltages (e.g., 400 V to 800 V) are applied thereto due to the increased voltages of the batteries of the electric vehicles. In addition, dielectric capacitors of such a type are required to have large capacitances (i.e., to increase their capacitances) in addition to high withstand voltages and high relative permittivities in high electric fields.

Notably, as shown in Patent Document 1, in order to enable a dielectric capacitor to have a large capacitance in an environment in which a high voltage is applied, it is required that a change (the amount of decrease) in relative permittivity upon application of a DC volage is small.

Although a dielectric composition containing BaTiO₃ which has high permittivity has been conventionally used for dielectric capacitors, the relative permittivity of the dielectric composition containing BaTiO₃ in a high electric field is significantly low. Therefore, there has been proposed to use, for a dielectric capacitor, for example, a dielectric composition having a tungsten bronze-type structure as shown in Patent Document 1.

### PRIOR ART DOCUMENT

### PATENT DOCUMENT

Patent Document 1: WO2017/163845

### SUMMARY OF THE INVENTION

### PROBLEM TO BE SOLVED BY THE INVENTION

In the case of the conventional dielectric composition having a tungsten bronze-type structure, although the above-described change (the amount of decrease) in the relative permittivity is small, the relative permittivity in a high electric field cannot be said to be sufficiently high, which has been a problem.

An object of the present invention is to provide a dielectric composition, etc. in which the amount of decrease in relative permittivity upon application of a DC high voltage is small and the relative permittivity in a high electric field is high.

### MEANS FOR SOLVING THE PROBLEM

Means for solving the above-described problem are as follows.
<1> A dielectric composition containing a strontium component, a sodium component, a niobium component, a calcium component, an yttrium component, and a zirconium component, wherein the mole ratios (%) of the respective components of the dielectric composition, expressed as their oxides, satisfy the following conditions:
   14.7 ≤ strontium component ≤ 20.7,
   13.5 ≤ sodium component ≤ 23.5,
   60.1 ≤ niobium component ≤ 63.2,
   0.66 ≤ calcium component ≤ 2.93,
   0.53 ≤ yttrium component ≤ 2.23, and
   0.48 ≤ zirconium component ≤ 2.27.
   This feature yields the effect that its relative permittivity at 8 kV/mm is 600 or more, and the ratio of change in the relative permittivity with a change from 0 kV/mm to 8 kV/mm is more than -41%.
<2> The dielectric composition recited in the above paragraph <1>, wherein the dielectric composition contains a strontium component, a sodium component, a niobium component, a calcium component, an yttrium component, and a zirconium component, and the mole ratios (%) of the respective components of the dielectric composition, expressed as their oxides, satisfy the following conditions:
   14.7 ≤ strontium component ≤ 20.7,
   14.2 ≤ sodium component ≤ 23.5,
   60.1 ≤ niobium component ≤ 63.2,
   0.66 ≤ calcium component ≤ 1.56,
   0.53 ≤ yttrium component ≤ 1.25, and
   0.48 ≤ zirconium component ≤ 1.24.
   This feature yields the effect that its relative permittivity at 8 kV/mm is 700 or more, and the ratio of change in the relative permittivity with a change from 0 kV/mm to 8 kV/mm is more than -41%.
<3> The dielectric composition recited in the above paragraph <1>, wherein the dielectric composition contains a strontium component, a sodium component, a niobium component, a calcium component, an yttrium component, and a zirconium component, and the mole ratios (%) of the respective components of the dielectric composition, expressed as their oxides, satisfy the following conditions:
   16.8 ≤ strontium component ≤ 20.4,
   13.5 ≤ sodium component ≤ 14.3,
   61.7 ≤ niobium component ≤ 63.1,
   1.21 ≤ calcium component ≤ 2.93,
   1.09 ≤ yttrium component ≤ 2.23, and
   1.00 ≤ zirconium component ≤ 2.27.
   This feature yields the effect that its relative permittivity at 8 kV/mm is 600 or more, and the ratio of change in the relative permittivity with a change from 0 kV/mm to 8 kV/mm is -5.9% or more.
<4> The dielectric composition recited in the above paragraph <1>, wherein the mole ratios (%) of the respective components, expressed as their oxides, satisfy the following conditions:
   14.7 ≤ strontium component ≤ 20.7,
   14.3 ≤ sodium component ≤ 23.5,
   60.1 ≤ niobium component ≤ 63.2,
   0.66 ≤ calcium component ≤ 0.76,
   0.53 ≤ yttrium component ≤ 0.59, and
   0.48 ≤ zirconium component ≤ 0.59.
<5> The dielectric composition recited in the above paragraph <1>, wherein the mole ratios (%) of the respective components, expressed as their oxides, satisfy the following conditions:
   18.2 ≤ strontium component ≤ 20.7,
   14.3 ≤ sodium component ≤ 17.3,
   62.6 ≤ niobium component ≤ 63.2,
   0.67 ≤ calcium component ≤ 0.76,
   0.53 ≤ yttrium component ≤ 0.55, and
   0.49 ≤ zirconium component ≤ 0.59.
<6> A dielectric element comprising:
   a dielectric ceramic formed of the dielectric composition recited in any one of the above paragraphs <1> to <5>; and
   electrodes attached to the dielectric ceramic.
<7> A laminated electronic component comprising a laminated body in which dielectric layers formed of the dielectric composition recited in any one of the above paragraphs <1> to <5> and internal electrode layers are alternatingly stacked.

### EFFECT OF THE INVENTION

According to the present invention, it is possible to provide a dielectric composition, etc. in which the amount of decrease in relative permittivity upon application of a DC high voltage is small and the relative permittivity in a high electric field is high.

### BRIEF DESCRIPTION OF THE DRAWINGS

[FIG. 1] FIG. 1 is a perspective view of a dielectric element.
[FIG. 2] FIG. 2 is a sectional view of a laminated electronic component.

### MODES FOR CARRYING OUT THE INVENTION

A dielectric composition, a dielectric element, and a laminated electronic component according to an embodiment will now be described.

The dielectric composition is a sintered ceramic body containing a strontium component, a sodium component, a niobium component, a calcium component, an yttrium component, and a zirconium component.

The mole ratios (%) of the respective components of the dielectric composition, expressed as their oxides, satisfy 14.7 ≤ strontium component ≤ 20.7, 14.3 ≤ sodium component ≤ 23.5, 60.1 ≤ niobium component ≤ 63.2, 0.656 ≤ calcium component ≤ 0.763, 0.531 ≤ yttrium component ≤ 0.586, and 0.483 ≤ zirconium component ≤ 0.589.

The above-described mole ratios (%) expressed as their oxides refer to the mole ratios of the respective components of the dielectric composition as calculated as the mole ratios of their oxides under the assumption that the dielectric composition is completely decomposed and changes to oxides, wherein, with the total amount of the oxides being considered 100% by mole, the amount of the oxide of each component contained in the dielectric composition is represented by mole ratio (%).

The strontium component (hereinafter may be referred to as the "Sr component") is present in the dielectric composition in the form of, for example, an oxide or ions.

In the dielectric composition, the mole ratio (%) of the Sr component expressed as its oxide (SrO) is 14.7 or more and 20.7 or less.

Examples of the material of the Sr component include compounds which can become the Sr component when fired. Examples of the compounds which can become the Sr component include powders of various inorganic compounds such as oxides of Sr, complex oxides of Sr, hydroxide of Sr, carbonate of Sr, chloride of Sr, sulphate of Sr, nitrate of Sr, and phosphate of Sr. A specific example is powder of strontium carbonate. The amount of a compound used, which can become the Sr component, is determined on the basis of the mole ratio (%) expressed as its oxide (SrO).

The sodium component (hereinafter may be referred to as the "Na component") is present in the dielectric composition in the form of, for example, an oxide or ions.

In the dielectric composition, the mole ratio (%) of the Na component expressed as its oxide (NaO_{0.5}) is 14.3 or more and 23.5 or less.

Examples of the material of the Na component include compounds which can become the Na component when fired. Examples of the compounds which can become the Na component include powders of various inorganic compounds such as oxides of Na, complex oxides of Na, hydroxide of Na, carbonate of Na, chloride of Na, sulphate of Na, nitrate of Na, and phosphate of Na. A specific example is powder of sodium carbonate. The amount of a compound used, which can become the Na component, is determined on the basis of the mole ratio (%) expressed as its oxide (NaO_{0.5}).

The niobium component (hereinafter may be referred to as the "Nb component") is present in the dielectric composition in the form of, for example, an oxide or ions.

In the dielectric composition, the mole ratio (%) of the Nb component expressed as its oxide (NbO_{2.5}) is 60.1 or more and 63.2 or less.

Examples of the material of the Nb component include compounds which can become the Nb component when fired. Examples of the compounds which can become the Nb component include powders of various inorganic compounds such as oxides of Nb, complex oxides of Nb, hydroxide of Nb, carbonate of Nb, chloride of Nb, sulphate of Nb, nitrate of Nb, and phosphate of Nb. A specific example is powder of niobium oxide. The amount of a compound used, which can become the Nb component, is determined on the basis of the mole ratio (%) expressed as its oxide (NbO_{2.5}).

The calcium component (hereinafter may be referred to as the "Ca component") is present in the dielectric composition in the form of, for example, an oxide or ions.

In the dielectric composition, the mole ratio (%) of the Ca component expressed as its oxide (CaO) is 0.656 or more and 0.763 or less.

Examples of the material of the Ca component include compounds which can become the Ca component when fired. Examples of the compounds which can become the Ca component include powders of various inorganic compounds such as oxides of Ca, complex oxides of Ca, hydroxide of Ca, carbonate of Ca, chloride of Ca, sulphate of Ca, nitrate of Ca, and phosphate of Ca. A specific example is powder of calcium carbonate. The amount of a compound used, which can become the Ca component, is determined on the basis of the mole ratio (%) expressed as its oxide (CaO).

The yttrium component (hereinafter may be referred to as the "Y component") is present in the dielectric composition in the form of, for example, an oxide or ions.

In the dielectric composition, the mole ratio (%) of the Y component expressed as its oxide (YO_{1.5}) is 0.531 or more and 0.586 or less.

Examples of the material of the Y component include compounds which can become the Y component when fired. Examples of the compounds which can become the Y component include powders of various inorganic compounds such as oxides of Y, complex oxides of Y, hydroxide of Y, carbonate of Y, chloride of Y, sulphate of Y, nitrate of Y, and phosphate of Y. A specific example is powder of yttrium oxide. The amount of a compound used, which can become the Y component, is determined on the basis of the mole ratio (%) expressed as its oxide (YO_{1.5})

The zirconium component (hereinafter may be referred to as the "Zr component") is present in the dielectric composition in the form of, for example, an oxide or ions.

In the dielectric composition, the mole ratio (%) of the Zr component expressed as its oxide (ZrO₂) is 0.483 or more and 0.589 or less.

Examples of the material of the Zr component include compounds which can become the Zr component when fired. Examples of the compounds which can become the Zr component include powders of various inorganic compounds such as oxides of Zr, complex oxides of Zr, hydroxide of Zr, carbonate of Zr, chloride of Zr, sulphate of Zr, nitrate of Zr, and phosphate of Zr. A specific example is powder of zirconium oxide. The amount of a compound used, which can become the Zr component, is determined on the basis of the mole ratio (%) expressed as its oxide (ZrO₂).

So long as the object of the present invention is not impaired, the dielectric composition may contain, as unavoidable impurities, elements other than the strontium component, the sodium component, the niobium component, the calcium component, the yttrium component, and the zirconium component, at a ratio of 1000 ppm or less.

Notably, a method for producing the dielectric composition will be described when necessary in the description of a method for producing a dielectric element and a method for producing a laminated electronic component, which will be described later.

In the case where the mole ratios (%) of the strontium component, the sodium component, the niobium component, the calcium component, the yttrium component, and the zirconium component of the dielectric composition, expressed as their oxides, fall within the above-described ranges, the relative permittivity in a high electric field (8 kV/mm) is 900 or more, the ratio of decrease in the relative permittivity upon application of a DC high voltage is more than -41%, and the above-described relative permittivity decrease amount is reduced.

No particular limitation is imposed on the relative permittivity of the dielectric composition in a state in which no electric field is applied (0 kV/mm), so long as the object of the present invention is not impaired, but is preferably 1,400 or more, more preferably 1,500 or more.

In particular, the mole ratios (%) of the respective components of the dielectric composition, expressed as their oxides, preferably satisfy 18.2 ≤ strontium component ≤ 20.1, 15.0 ≤ sodium component ≤ 17.3, 62.6 ≤ niobium component ≤ 63.1, 0.756 ≤ calcium component ≤ 0.763, 0.536 ≤ yttrium component ≤ 0.549, and 0.489 ≤ zirconium component ≤ 0.548. In the case where the mole ratios (%) of the above-described components fall within these ranges, the relative permittivity in a high electric field (8 kV/mm) is 1,000 or more, the ratio of decrease in the relative permittivity upon application of a DC high voltage is -35% or more, and the above-described relative permittivity decrease amount is further reduced.

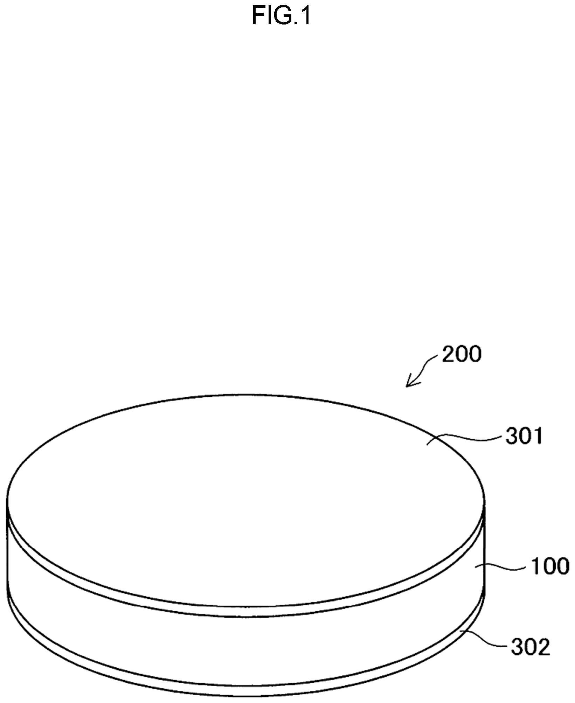

Next, a dielectric element 200 which includes a dielectric ceramic 100 formed of a dielectric composition will be described with reference to FIG. 1. FIG. 1 is a perspective view of the dielectric element 200. As shown in FIG. 1, the dielectric element 200 has a disc-like appearance and includes a disc-shaped dielectric ceramic (dielectric layer) 100 and electrodes 301 and 302 attached to the upper and lower surfaces of the dielectric ceramic 100. The dielectric ceramic 100 is formed of the above-described dielectric composition. The electrodes 301 and 302 are formed of, for example, Au.

Here, one example of the method for producing the dielectric element 200 will be described. First, as material powders, there are prepared powder of strontium carbonate (one example of the compound which can become the Sr component), powder of sodium carbonate (one example of the compound which can become the Na component), powder of niobium oxide (one example of the compound which can become the Nb component), powder of calcium carbonate (one example of the compound which can become the Ca component), powder of yttrium oxide (one example of the compound which can become the Y component), and powder of zirconium oxide (one example of the compound which can become the Zr component). These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. The slurry is dried and granulated to obtain granulates. A disc-shaped preliminary compact is obtained by compressing the obtained granulates at a pressure of 20 MPa by uniaxial pressing. Subsequently, a CIP process (cold isostatic pressing process) is performed on the disc-shaped preliminary compact at a pressure of 150 MPa, whereby a compact is obtained.

The obtained compact is held at 650°C for 4 hours so as to perform a debindering process. The compact having undergone the debindering process is fired in an air atmosphere; specifically, the compact is held at a temperature of 1,300°C to 1,350°C in an air atmosphere for 4 hours, whereby a dielectric ceramic (dielectric layer) formed of the dielectric composition is obtained. The opposite main faces (upper and lower surfaces) of the obtained dielectric ceramic are polished, and Au external electrodes are formed on the opposite main faces by sputtering, whereby the dielectric element 200 is obtained.

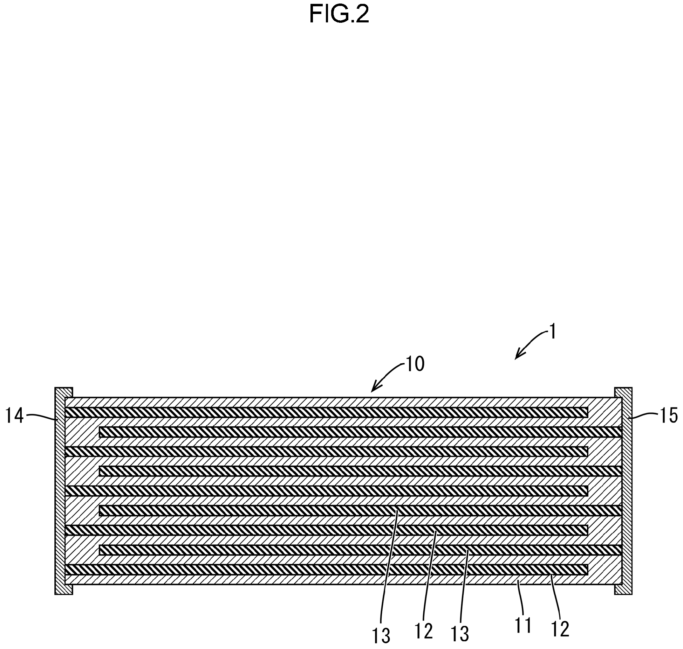

Next, a laminated electronic component 1 including dielectric layers 11 formed of a dielectric composition will be described with reference to FIG. 2. FIG. 2 is a sectional view of the laminated electronic component 1. The laminated electronic component 1 is a so-called laminated ceramic capacitor. As shown in FIG. 2, the laminated electronic component 1 includes a laminated body 10 which includes a plurality of dielectric layers 11 formed of a dielectric composition, and first internal electrode layers (one example of internal electrode layers) 12 and second internal electrode layers (one example of internal electrode layers) 13 alternatingly stacked with the dielectric layers 11 intervening therebetween. The laminated electronic component 1 further includes a first external electrode 14 and a second external electrode 15 which are electrically connected to the first internal electrode layers 12 and the second internal electrode layers 13, respectively, and are formed on the outer surface of the laminated body 10. The first external electrode 14 is connected to the first internal electrode layers 12 on one side surface of the laminated electronic component 1, and the second external electrode 15 is connected to the second internal electrode layers 13 on the other side surface of the laminated electronic component 1.

Examples of the material of the first internal electrode layers 12 and the second internal electrode layers 13 include, for example, Cu, Ag, and Ni. Examples of the material of the first external electrode 14 and the second external electrode 15 include, for example, Au.

Here, one example of the method for producing the laminated electronic component 1 will be described. First, as material powders, there are prepared powder of strontium carbonate (one example of the compound which can become the Sr component), powder of sodium carbonate (one example of the compound which can become the Na component), powder of niobium oxide (one example of the compound which can become the Nb component), powder of calcium carbonate (one example of the compound which can become the Ca component), powder of yttrium oxide (one example of the compound which can become the Y component), and powder of zirconium oxide (one example of the compound which can become the Zr component). These powders are weighed to obtain a target composition.

The weighed material powders with ethanol added thereto are wet-mixed in a ball mill for 15 hours or more to obtain a slurry. The obtained slurry is appropriately dried, whereby mixed powder is obtained. The obtained mixed powder is calcined at a temperature of 1,100°C to 1,300°C in an air atmosphere for 5 to 7 hours, whereby calcined powder is obtained.

The calcined powder thus obtained is mixed with a dispersant, a binder, and ethanol, and then pulverized to obtain a slurry. A plurality of ceramic green sheets are produced from the slurry by the doctor blade method.

Subsequently, by using electrically conductive paste for internal electrodes, electrode layers which become the internal electrode layers (the first internal electrode layer and the second internal electrode layers) are formed on one side of the ceramic green sheet through, for example, screen printing. The electrode layers contain gold (Au) as a main component. Notably, the electrode layers may be those containing, as a main component, a metal other than Au, for example, platinum (Pt) or a base metal (e.g., nickel (Ni)) or those formed of other materials (e.g., Ag-Pd).

Subsequently, the plurality of ceramic green sheets with the electrode layers formed thereon are stacked in such a manner that the electrode layers are alternatingly exposed from the opposite side surfaces, and ceramic green sheets with no electrode layer are stacked on the front and back surfaces of the obtained laminated body. The obtained laminated body is compressed, whereby a laminated body in which the ceramic green sheets and the electrode layers are alternatingly stacked is obtained. This laminated body is cut into a desired shape and is held at a temperature of, for example, 200°C to 400°C for 2 to 10 hours so as to perform a debindering process.

The laminated body having undergone the debindering process is fired in an air atmosphere; specifically, the laminated body is held at a temperature of 1,300°C to 1,350°C in an air atmosphere or in a reducing atmosphere for 4 hours. As a result of firing, the ceramic green sheets become the dielectric layers 11, and the electrode layers become the internal electrode layers (the first internal electrode layers and the second internal electrode layers).

After polishing the side surfaces of the fired laminated body 10 (by barrel polishing, sand blast, etc.), a pair of Au external electrodes (the first external electrode 14 and the second external electrode 15) are formed on the side surfaces of the laminated body 10 by, for example, sputtering. In this manner, the laminated electronic component 1 is obtained.

In the case of the dielectric composition disclosed in the present specification, the amount of decrease in relative permittivity upon application of a DC high voltage is small, and the relative permittivity in a high electric field is high. In addition, the dielectric composition has a high withstanding voltage.

The dielectric element and the laminated electronic component each of which includes a dielectric layer formed of the above-described dielectric composition is used, for example, in the powertrain of an electric vehicle in which a high voltage (for example, 400 V to 800 V) is applied. Examples of the laminated electronic component include dielectric capacitors, laminated ceramic capacitors, etc. In addition, the above-described dielectric composition may be used in various electronic apparatuses such as home appliances, automobile control equipment, etc.

### EXAMPLES

The present invention will now be described in more detail on the basis of examples. Notably, the present invention is not limited in any way by these examples.

### [Examples 1 to 5, Comparative Examples 1 to 4]

First, as material powders, there were prepared powder of strontium carbonate, powder of calcium carbonate, powder of sodium carbonate, powder of potassium carbonate, powder of niobium oxide, powder of yttrium oxide, and powder of zirconium oxide. From these powders, powders necessary for producing each sample were selected and weighed to obtain a target composition shown in Table 1. The weighed material powders with ethanol added thereto were wet-mixed in a ball mill for 15 hours or more to obtain a slurry. The obtained slurry was appropriately dried, whereby mixed powder was obtained. The obtained mixed powder was calcined at a temperature of 1,200°C in an air atmosphere for 6 hours, whereby calcined powder was obtained.

The calcined powder thus obtained was mixed with a dispersant, a binder, and ethanol, and then pulverized to obtain a slurry. The slurry was dried and granulated to obtain granulates. A disc-shaped preliminary compact was obtained by compressing the obtained granulates at a pressure of 20 MPa by uniaxial pressing. Subsequently, a CIP process (cold isostatic pressing process) was performed on the disc-shaped preliminary compact at a pressure of 150 MPa, whereby a compact was obtained.

The obtained compact was held at 650°C for 4 hours so as to perform a debindering process. The compact having undergone the debindering process was fired in an air atmosphere; specifically, the compact was held at a temperature of 1,300°C to 1,350°C in an air atmosphere for 4 hours, whereby a dielectric ceramic formed of the dielectric composition was obtained. The opposite main faces (upper and lower surfaces) of the obtained dielectric ceramic were polished, whereby a measurement sample having mirror-like opposite main faces was obtained.

Subsequently, for evaluation of electrical characteristics, Au external electrodes were formed on the opposite main faces of the dielectric ceramic by sputtering, whereby a dielectric element (a measurement sample for evaluation of electrical characteristics) was obtained.

### [Evaluation]

For the samples of Examples 1 to 5 and Comparative Examples 1 to 4, experiments described below were performed.

### (Composition analysis)

The composition of each sample was analyzed by X-ray fluorescence analysis (XRF). A measurement surface of each sample was a mirror-like main face, and the measurement diameter was set to 1 mm. The results are shown in Table 1. Notably, each composition is shown by the mole ratios (%) of the components expressed as their oxides.

The mole ratios (%) expressed as their oxides refer to the mole ratios of the respective components of each sample (dielectric composition) as calculated as the mole ratios of their oxides under the assumption that the sample (dielectric composition) is completely decomposed and changes to oxides, wherein, with the total amount of the oxides being considered 100% by mole, the amount of the oxide of each component contained in the sample (dielectric composition) is represented by mole ratio (%).

### (Relative permittivity)

The relative permittivities (0 kV/mm, 8 kV/mm) of each measurement sample for evaluation of electrical characteristics were respectively calculated from the value of capacitance at 1 kHz measured at room temperature by an impedance analyzer in a state in which no DC voltage was applied to the measurement sample (namely, 0 kV/mm) and the value of capacitance at 1 kHz measured at room temperature by the impedance analyzer in a state in which a DC voltage of 8 kV/mm was applied to the measurement sample. The results are shown in Table 1.

### (Decrease ratio of relative permittivity)

The ratio of decrease (ratio of change) [%] from the relative permittivity at the time when the application voltage was 0 kV/mm to the relative permittivity at the time when the application voltage was 8 kV/mm was obtained by the formula {[(relative permittivity at 8 kV/mm) - (relative permittivity at 0 kV/mm)]/(relative permittivity at 0 kV/mm)}×100. The results are shown in Table 1.

**[Table 1]**

| | Composition | | | | | | | Relative permittivity (0kV/mm) | Relative permittivity (8kV/mm) | Decrease ratio (%) |
|---|---|---|---|---|---|---|---|---|---|---|
| | SrO | CaO | YO_{1.5} | KO_{0.5} | NaO_{0.5} | NbO_{2.5} | ZrO₂ | | | |
| Example 1 | 14.7 | 0.66 | 0.55 | 0 | 23.5 | 60.1 | 0.49 | 1510 | 972 | -35.6 |
| Example 2 | 16.6 | 0.69 | 0.59 | 0 | 19.0 | 62.6 | 0.48 | 1603 | 988 | -38.4 |
| Example 3 | 18.2 | 0.76 | 0.55 | 0 | 17.3 | 62.6 | 0.55 | 1503 | 1051 | -30.1 |
| Example 4 | 20.1 | 0.76 | 0.54 | 0 | 15.0 | 63.1 | 0.49 | 1634 | 1166 | -28.6 |
| Example 5 | 19.0 | 1.56 | 1.09 | 0 | 14.3 | 63.1 | 1.00 | 825 | 783 | -5.1 |
| Example 6 | 17.9 | 1.88 | 1.71 | 0 | 14.1 | 62.8 | 1.61 | 625 | 629 | 0.6 |
| Example 7 | 16.8 | 2.93 | 2.23 | 0 | 13.5 | 62.2 | 2.27 | 597 | 600 | 0.4 |
| Example 8 | 20.7 | 0.67 | 0.53 | 0 | 14.3 | 63.2 | 0.59 | 1991 | 1183 | -40.6 |
| Example 9 | 20.4 | 1.21 | 1.25 | 0 | 14.2 | 61.7 | 1.24 | 831 | 782 | -5.9 |
| Comp. Example 1 | 23.4 | 0.89 | 0.61 | 0 | 8.7 | 65.7 | 0.63 | 1385 | 818 | -41.0 |
| Comp. Example 2 | 21.9 | 0.83 | 0.57 | 7.6 | 3.2 | 65.3 | 0.60 | 2095 | 1037 | -50.5 |
| Comp. Example 3 | 21.8 | 0.73 | 0.59 | 5.0 | 6.2 | 65.2 | 0.59 | 2372 | 1165 | -50.9 |
| Comp. Example 4 | 21.9 | 0.70 | 0.56 | 2.6 | 8.4 | 65.3 | 0.51 | 2352 | 1141 | -51.5 |

As shown in Table 1, in the dielectric compositions of Examples 1 to 4 and 8, the relative permittivity in a high electric field (8 kV/mm) was 900 or more, and the ratio of decrease (ratio of change) in the relative permittivity upon application of a DC high voltage was more than -41%, whereby the amount of decrease in the relative permittivity was reduced. In particular, the results show that, in the dielectric compositions of Examples 3, 4, and 8, the relative permittivity at 8 kV/mm was 1,000 or more, and the ratio of decrease (ratio of change) in the relative permittivity was more than -41%.

The results show that, in the dielectric compositions of Examples 1 to 9, the relative permittivity at 8 kV/mm was 600 or more, and the ratio of decrease (ratio of change) in the relative permittivity was more than -41%. The results show that, in the dielectric compositions of Examples 1 to 5, 8, and 9, the relative permittivity at 8 kV/mm was 700 or more, and the ratio of decrease (ratio of change) in the relative permittivity was more than -41%. The results show that, in the dielectric composition of Example 9, the relative permittivity at 8 kV/mm was 600 or more, and the ratio of decrease (ratio of change) in the relative permittivity was -5.9% or more.

The results show that, in the dielectric composition of Comparative Example 1, the relative permittivity in a high electric field (8 kV/mm) was small. In addition, in the dielectric composition of Comparative Example 1, the amount of decrease in the relative permittivity was greater as compared with those in Examples 1 to 9.

In the dielectric compositions of Comparative Example 2 to 4, although the relative permittivity in a high electric field (8 kV/mm) was large, the amount of decrease in the relative permittivity was greater as compared with those in Examples 1 to 9.

Notably, in the dielectric compositions of Examples 3 and 4, the relative permittivity in a high electric field (8 kV/mm) was 1,000 or more, and the ratio of decrease (ratio of change) in the relative permittivity upon application of a DC high voltage was -35% or more, whereby the amount of decrease in the relative permittivity was further reduced.

### DESCRIPTION OF REFERENCE NUMERALS

100: dielectric ceramic (dielectric layer), 200: dielectric element, 301, 302: electrode, 1: laminated electronic component, 10: laminated body, 11: dielectric layer, 12: first internal electrode layer (internal electrode layer), 13: second internal electrode layer (internal electrode layer), 14: first external electrode, 15: second external electrode

## Claims

1. A dielectric composition containing a strontium component, a sodium component, a niobium component, a calcium component, an yttrium component, and a zirconium component, wherein the mole ratios (%) of the respective components of the dielectric composition, expressed as their oxides, satisfy the following conditions:
14.7 ≤ strontium component ≤ 20.7,
13.5 ≤ sodium component ≤ 23.5,
60.1 ≤ niobium component ≤ 63.2,
0.66 ≤ calcium component ≤ 2.93,
0.53 ≤ yttrium component ≤ 2.23, and
0.48 ≤ zirconium component ≤ 2.27.

2. The dielectric composition according to claim 1, wherein the mole ratios (%) of the respective components, expressed as their oxides, satisfy the following conditions:
14.7 ≤ strontium component ≤ 20.7,
14.2 ≤ sodium component ≤ 23.5,
60.1 ≤ niobium component ≤ 63.2,
0.66 ≤ calcium component ≤ 1.56,
0.53 ≤ yttrium component ≤ 1.25, and
0.48 ≤ zirconium component ≤ 1.24.

3. The dielectric composition according to claim 1, wherein the mole ratios (%) of the respective components, expressed as their oxides, satisfy the following conditions:
16.8 ≤ strontium component ≤ 20.4,
13.5 ≤ sodium component ≤ 14.3,
61.7 ≤ niobium component ≤ 63.1,
1.21 ≤ calcium component ≤ 2.93,
1.09 ≤ yttrium component ≤ 2.23, and
1.00 ≤ zirconium component ≤ 2.27.

4. The dielectric composition according to claim 1, wherein the mole ratios (%) of the respective components, expressed as their oxides, satisfy the following conditions:
14.7 ≤ strontium component ≤ 20.7,
14.3 ≤ sodium component ≤ 23.5,
60.1 ≤ niobium component ≤ 63.2,
0.66 ≤ calcium component ≤ 0.76,
0.53 ≤ yttrium component ≤ 0.59, and
0.48 ≤ zirconium component ≤ 0.59.

5. The dielectric composition according to claim 1, wherein the mole ratios (%) of the respective components, expressed as their oxides, satisfy the following conditions:
18.2 ≤ strontium component ≤ 20.7,
14.3 ≤ sodium component ≤ 17.3,
62.6 ≤ niobium component ≤ 63.2,
0.67 ≤ calcium component ≤ 0.76,
0.53 ≤ yttrium component ≤ 0.55, and
0.49 ≤ zirconium component ≤ 0.59.

6. A dielectric element comprising:
a dielectric ceramic formed of the dielectric composition recited in any one of claims 1 to 5; and
electrodes attached to the dielectric ceramic.

7. A laminated electronic component comprising a laminated body in which dielectric layers formed of the dielectric composition recited in any one of claims 1 to 5 and internal electrode layers are alternatingly stacked.
